**Europäisches Patentamt**

**European Patent Office**

**Office européen des brevets**

(19)

(11) Veröffentlichungsnummer : **0 330 738 B1**

## (12) EUROPÄISCHE PATENTSCHRIFT

(45) Veröffentlichungstag der Patentschrift :
**13.11.91 Patentblatt 91/46**

(51) Int. Cl.⁵ : **B42D 15/10,** B42D 209/00,
B29C 59/02

(21) Anmeldenummer : **88119062.3**

(22) Anmeldetag : **17.11.88**

(54) **Dokument.**

(30) Priorität : **03.03.88 CH 805/88**

(43) Veröffentlichungstag der Anmeldung :
**06.09.89 Patentblatt 89/36**

(45) Bekanntmachung des Hinweises auf die
Patenterteilung :
**13.11.91 Patentblatt 91/46**

(84) Benannte Vertragsstaaten :
**AT CH DE FR GB LI**

(56) Entgegenhaltungen :
**EP-A- 0 178 232**

(73) Patentinhaber : **Landis & Gyr Betriebs AG
CH-6301 Zug (CH)**

(72) Erfinder : **Antes, Gregor
Moussonstrasse 14
CH-8044 Zürich (CH)**
Erfinder : **Saxer, Christian
Uitikonerstrasse 37
CH-8902 Urdorf (CH)**

(74) Vertreter : **Müller, Hans-Jürgen, Dipl.-Ing. et al
Müller, Schupfner & Gauger
Maximilianstrasse 6 Postfach 10 11 61
W-8000 München 1 (DE)**

EP 0 330 738 B1

## Beschreibung

Die Erfindung bezieht sich auf ein Dokument mit einem beugungsoptischen Sicherheitselement der im Oberbegriff des Patentanspruches 1 genannten Art, wie es als eine schwer fälschbare Echtheitsinformation insbesondere bei Wertpapieren, Ausweisen, Zahlungsmitteln und ähnlichen zu sichernden Gegenständen verwendbar ist, und auf ein Verfahren zu dessen Herstellung.

Dokumente dürfen nicht vervielfältigbar sein. Moderne Dokumente weisen daher Sicherheitselemente auf, die beispielsweise mittels Beugung des Umgebungslichtes Echtheitsinformationen des gesicherten Gegenstandes auch dem ungeübten Laien sichtbar machen. Ein derartiges Dokument und ein Verfahren zu dessen Herstellung beschreibt beispielsweise die CH-PS 594936.

Die Beugung wird durch eingeprägte Gitterstrukturen mit einem optisch wirksamen Überzug verursacht, die im einfachsten Fall wellenartige, geradlinige Reliefstrukturen sind. Die Beugungseigenschaften dieser Reliefstrukturen werden unter anderem durch die Spatialfrequenz, d.h. die Anzahl Linien pro mm, durch die Querschnittsform der Reliefstruktur und durch die Höhenunterschiede in der Reliefstruktur sowie durch die Orientierung der Reliefstruktur auf dem Dokument bestimmt.

Die DE-OS 3206062 beschreibt eine Beglaubigungseinrichtung, deren beugende Struktur sich aus Teilflächen mit unterschiedlichen Strukturparametern zusammensetzt. Jede einzelne Teilfläche ist mindestens so gross, dass das auf die Beglaubigungseinrichtung fallende, auf eine kennzeichnende Art in seine Farbbestandteile zerlegte Licht in einem Abstand von 25 cm als getrennte Bündel kennzeichnender Farben mit einem Raumwinkel von mindestens 2 Milliradiant bzw. von etwa 7 Bogenminuten entstehen. Diese Teilflächen sind daher mit dem unbewaffneten Auge leicht zu erkennen und heben sich von den benachbarten Flächen durch z.B. kontrastierende Farben ab.

Ändern sich die Gitterparameter kontinuierlich oder von Teilfläche zu Teilfläche in kleinen Schritten innerhalb der beugenden Struktur, so entstehen auf dem Dokument für das Auge des Beobachters sich in einer vorbestimmten Bahn bewegende Farbeindrücke, wenn die Lage des Dokuments in bezug auf die Lichtquelle und das unbewaffnete Auge verändert wird. Dokumente dieser Art beschreibt die EP-105099.

Diese Dokumente lassen sich kostengünstig durch Verformen einer Kunststoffschicht mit einem heizbaren Prägestempel herstellen, der dabei das reliefartige, von einer Masterstruktur galvanisch abgeformte Negativ des Sicherheitselements trägt.

Eine Herstellungsart dieser Masterstruktur ist aus EP-169326 bekannt. Eine Kunststoffschicht wird an der Oberfläche in einer kleinen kreisförmigen Zone durch eine eine vorbestimmte Reliefstruktur tragende Matrize elastisch deformiert. Mittels eines Lichtbündels wird die der Matrize zugewandte Oberfläche so lange lokal erwärmt, bis der Kunststoff in einem durch das Lichtbündel begrenzten Flächenelement erweicht und durch eine plastische Deformation die Reliefstruktur auf die Oberfläche übertragen wird. Eine derart hergestellte Masterstruktur kann aus einer grossen Zahl von Teilflächen bestehen, die sich in ihren Beugungseigenschaften von den benachbarten unterscheiden. Die Fälschbarkeit wird durch die grosse Zahl unterschiedlich beugender Teilflächen wesentlich erschwert.

Der Erfindung liegt die Aufgabe zugrunde, ein Dokument der eingangs genannten Art sowie eine Vorrichtung zu dessen Herstellung zu schaffen, das sich durch eine nur mit einem hohen Aufwand kopier- oder fälschbare Struktur auszeichnet, die bei visueller Betrachtung ohne Hilfsmittel sichtbare Linien und Flächenelemente aufweist, welche ohne Hilfsmittel nicht sichtbare, zusätzliche graphische Merkmale enthalten.

Die Lösung der Aufgabe gelingt durch die kennzeichnenden Merkmale der Ansprüche 1 und 7.

Nachfolgend werden Ausführungsbeispiele der Erfindung anhand der Zeichnung erläutert.

Es zeigen

Figur 1 :    eine schematische Darstellung eines auf einem zu sichernden Gegenstand aufgebrachten Dokumentes,

Figur 2 :    Beispiele von Teilflächen einer beugenden Struktur,

Figur 3 :    ein visuelles Erscheinungsbild des Dokumentes,

Figur 4 :    einen vergrösserten Ausschnitt aus einer Teilfläche der Figur 2 und

Figur 5 :    eine Vorrichtung zum Herstellen einer Masterstruktur für diese Dokumente.

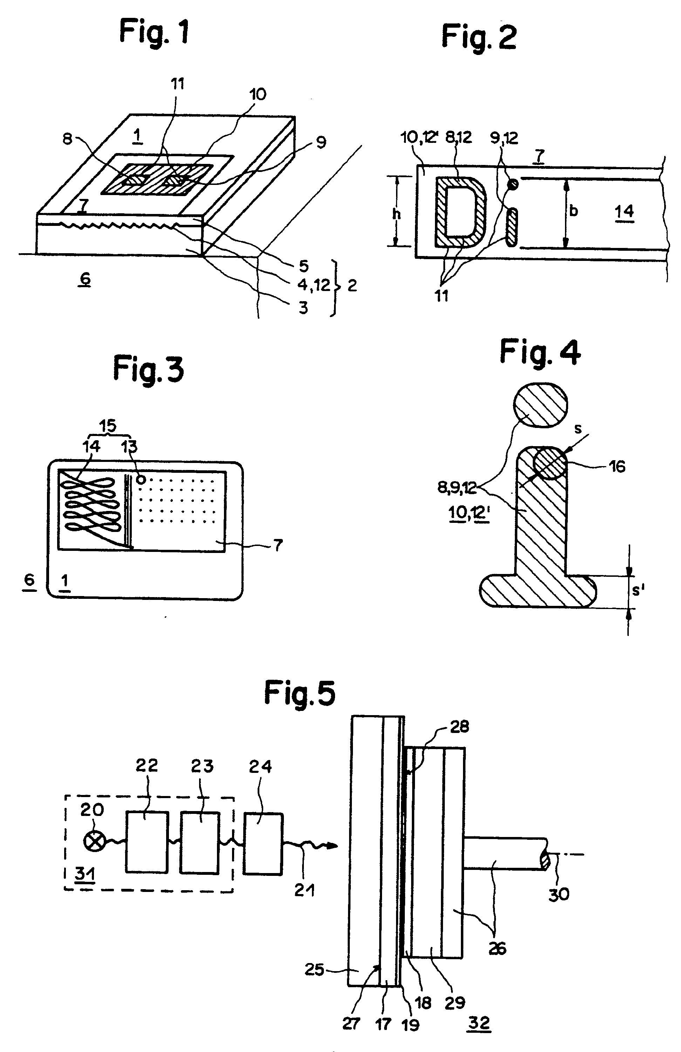

Ein Dokument 1 ist in der Figur 1 dargestellt, wobei zur besseren Verständlichkeit ein Teil des Dokumentes 1 weggeschnitten worden ist. Die Fläche 2 zeigt daher das Dokument 1 im Querschnitt. Das Dokument 1 besteht aus einem Substrat 3 mit einem optisch wirksamen Überzug 4 und einer transparenten Schutzschicht 5.

Der optisch wirksame Überzug 4 ist typisch eine dünne metallische oder dielektrische Schicht mit einer Dicke in der Grössenordnung 100 nm, jedoch kann die optische Wirkung allein auch nur durch eine Differenz zwischen den Brechungsindices der Schutzschicht 5 und des Substrates 3 bewirkt werden.

Das Substrat 3 kann beispielsweise eine Kunststofffolie zum Aufkleben auf einen zu sichernden Gegenstand 6 sein. Falls der zu sichernde Gegenstand 6 ein Papier, eine Folie oder ein Vlies ist, kann das Substrat 3 auch eine drucktechnisch direkt auf diesen Untergrund aufgebrachte Kunststoffschicht sein. Besteht der zu sichernde Gegenstand 6 aus Kunststoff, kann dieser direkt als Substrat 3 dienen, d.h. das Dokument 1 und der zu sichernde Gegenstand 6 bilden eine untrennbare Einheit. Das Dokument 1 ist schwer fälschbar oder nachahmbar und dient als Echtheitsausweis für Ausweise, Zahlungsmittel, Wertpapiere, Urkunden und dergleichen.

Beispielsweise wird mittels eines geheizten Stempels vor oder nach dem Aufbringen des optisch wirksamen Überzugs 4 in das Substrat 3 eine makroskopische und beugungsoptisch wirksame Struktur 7 eingeprägt. Die Wellenlänge des für die Beobachtung der Beugungseffekte verwendeten Lichtes und die Wahl der Materialien für das Substrat 3, für den optisch wirksamen Überzug 4 und für die Schutzschicht 5 bestimmen, ob die beugungsoptisch wirksame Struktur 7 ein Phasen- oder ein Amplitudengitter darstellt und ob die Struktur 7 in Transmission oder in Reflexion betrachtet werden muss. Auch eine Kombination beider Gitterarten und/oder beider Beobachtungsarten ist denkbar.

Die Struktur 7 weist eine Vielzahl von Teilflächen 8, 9, 10 mit mikroskopischen Reliefstrukturen 12 auf. Eine Berandung 11 trennt jede Teilfläche 8, 9, 10 von der anderen, wobei die Berandung 11 nur eine Hilfe ist, um die Formen der einzelnen Teilflächen 8, 9, 10 zu beschreiben und in den Zeichnungen sichtbar zu machen. Die Art und die Orientierung der Reliefstruktur 12 definieren in Wirklichkeit jede der Teilflächen 8, 9, 10. Bei der Beobachtung des Dokumentes 1 unterscheiden sich die Teilflächen 8, 9, 10 durch die Formen ihrer Berandung 11 und durch ihre Beugungseffekte voneinander, die durch die Wahl der Parameter und die Orientierung der eingeprägten Reliefstruktur 12 bestimmt sind.

Die Reliefstrukturen 12 weisen z.B. Querschnittsformen bekannter periodischer Funktionen auf mit den für die Beugung von sichtbarem Licht wirksamen Spatialfrequenzen von mehr als 10 Linien/mm. Herstellungsbedingte Grenzen beschränken den praktisch nutzbaren Bereich auf etwa 2500 Linien/mm. Aber auch Querschnittsformen mit aperiodischen Funktionen, die lokal Spatialfrequenzen aus diesem Bereich enthalten, wie z.B. Mattstrukturen, sind anwendbar. Der Höhenunterschied dieser Reliefstrukturen 12 ist typisch zwischen 50 nm und 10'000 nm gewählt.

In einer Ausführung des Dokumentes 1 nach Figur 2 sind die Teilflächen 8 und 9 von einer Teilfläche 10 der Struktur 7 umgeben. Beispielsweise unterscheidet sich die Teilfläche 8 von der benachbarten Teilfläche 9 nur hinsichtlich ihrer durch die Berandung 11 gegebenen Form, während sich die Teilfläche 10 von den beiden unmittelbar angrenzenden Teilflächen 8 und 9 durch eine Reliefstruktur 12' mit anderen Beugungseffekten abhebt. So kann die Teilfläche 8 oder 9 ein Schriftzeichen, eine Ziffer oder ein anderes Merkmal darstellen, das sich bei der Betrachtung des Dokumentes 1 durch die Intensität und die Farbe von der Teilfläche 10 abhebt.

Das normalsichtige menschliche Auge erkennt die Merkmale der Teilflächen 8 und 9 ohne Hilfsmittel, solange sie unter einem Sehwinkel von etwas mehr als 1 Bogenminute erscheinen. Im üblichen Augenabstand von ca. 25 cm erkennt somit das unbewaffnete normalsichtige menschliche Auge Merkmale ohne Schwierigkeiten, wenn die flächenbestimmenden Einzelheiten Abstände von mehr als 0,1 mm aufweisen. Die Abmessungen der Teilflächen 8 und 9 selbst müssen daher ein Vielfaches von 0,1 mm betragen, um deren Formen, die eines Schriftzeichens beispielsweise, unterscheiden zu können.

Weist die Teilfläche 8, 9 eine grösste Abmessung von 0,3 mm oder weniger auf, so wird sie je nach Stärke des Kontrastes im üblichen Augenabstand vom unbewaffneten menschlichen Auge auf dem Dokument 1 nur noch als ein strukturloser Punkt 13 (Figur 3) wahrgenommen.

In der Figur 2 liegen mehrere Teilflächen 8, 9 mit einer maximalen Höhe h in einer Reihe, wobei der Abstand der Teilflächen kleiner als 0,3 mm und somit bei normalem Augenabstand geringer als der für den minimalen Sehwinkel notwendigen Abstand ist. Sie bilden für das unbewaffnete Auge auf dem Dokument 1 eine Linie 14 mit einer Breite b, die gleich der Höhe h ist. Ist die Breite b kleiner als 0,3 mm, weist die Linie 14 eine unauffällige, strukturlose Berandung auf.

Die Teilflächen 8, 9 können so fein ausgestaltet sein, dass ihre durch die Berandung 11 begrenzten Flächen beispielsweise ein Schriftzeichen, eine Ziffer oder ein anderes graphisch gestaltetes Merkmal darstellen können, ohne dass die als Breite b bzw. Höhe h bezeichnete grösste Abmessung etwa 0,3 mm übersteigt. Für das unbewaffnete Auge erscheinen auf dem Dokument 1 die Teilflächen 8, 9, falls sie überhaupt wahrgenommen werden, daher als Punkte 13 (Figur 3) oder Linien 14.

Mit diesen Punkten 13 und diesen Linien 14 als Rasterelemente lassen sich makroskopische, vom unbewaffneten Auge auf dem Dokument 1 leicht erkennbare Muster 15 bilden, wobei der künstlerischen Gestaltung dieser Muster 15 keine Grenzen gesetzt sind.

3

Das unbewaffnete Auge erkennt nur das Muster 15 in einem von den Betrachtungs- und Beleuchtungsbedingungen abhängigen und von der Beugung an den Reliefstrukturen 12, 12′ bestimmten Spiel der Farben und der Leuchtkraft vor dem Hintergrund der in den anderen Teilflächen 10 erzeugten Beugungseffekte der Struktur 7.

Beispielsweise sind auf dem Dokument 1 in einer für eine Banknote bestimmten Ausführung in jedem Punkt 13 ein nationales Emblem und in jeder Linie 14 Texte enthalten, wobei letztere einen Hinweis auf den Herausgeber oder den Nominalwert geben. Diese zusätzlichen Informationen werden erst erkennbar, wenn die beugende Struktur 7 mittels einer einfachen Lupe betrachtet wird. Ein Prüfer kann mit diesem Hilfsmittel Schriftzeichen, Ziffern oder andere Merkmale erkennen, die in den Punkten 13 oder Linien 14 verborgen sind, und sich derart der Echtheit des Dokumentes 1 versichern.

Bei Schriftzeichen, Ziffern oder Merkmalen mit einer grössten Abmessung von weniger als 0,3 mm sind für deren gute Ausgestaltung Strichbreiten s (Figur 4) von weniger als 60 µm notwendig. Die Teilflächen 8, 9 setzen sich aus kreisförmigen Flächenelementen 16 mit einem Durchmesser s zusammen, die der feinsten Strichbreite s′ entspricht. Grössere Strichbreiten s′ können, wie in der Figur 4 am Beispiel des Schriftzeichens "i" gezeigt ist, aus den für die feinsten Strichbreiten benutzten, sich überlappenden Flächenelementen 16 zusammengesetzt sein.

Eine gleiche Orientierung und gleiche Parameter der Reliefstruktur 12 in allen Teilflächen 8, 9, die sich von denen der Reliefstruktur 12′ der Teilfläche 10 unterscheiden, fördert vorteilhaft die Erkennbarkeit. Der mit der Lupe bewaffnete Prüfer erkennt solche Teilflächen 8, 9 in der gleichen Farbe und der gleichen Leuchtkraft, die sich in Farbe und Leuchtkraft von der umgebenden Teilfläche 10 abheben.

Eine Gruppe von Schriftzeichen (Figur 2) kann sich auf einer Linie 14 mehrmals wiederholen. Beispielsweise stellt eine Gruppe einen Satz dar, wobei sich die Teilflächen 8, 9 für jedes Wort des Satzes durch eine andere Reliefstruktur 12 auszeichnen, so dass jedes Wort in einer anderen Farbe und Leuchtkraft erscheint.

Für eine rationelle Massenherstellung derartiger Dokumente 1 (Figur 1) sind Prägeverfahren vorzuziehen, wobei eine geheizte Prägematrize die Oberfläche des Substrats 3 plastisch deformiert.

Zur Herstellung der Prägematrize wird vorteilhaft mittels einer in der Figur 5 gezeigten Vorrichtung eine Masterstruktur auf einem Träger 17 erzeugt und danach von dieser Masterstruktur ein Negativ galvanisch abgeformt, das dann als Prägematrize dient. Die Vorrichtung überträgt ein Flächenelement 16 (Figur 4) nach dem anderen von einer unheizbaren Matrize 18 auf eine thermoplastische Deckschicht 19 des Trägers 17.

Die Vorrichtung besteht z.B. aus einer Strahlenquelle 20 für eine elektromagnetische Strahlung 21, einem Modulator 22 für die Intensität der Strahlung 21, einem Fokussiermittel 23, einer Strahlablenkvorrichtung 24, einer starren, ebenen Auflage 25 für den Träger 17 der thermoplastischen Deckschicht 19 und einem Mittel 26 zum Anpressen der Matrize 18 auf die zwischen ihr und dem Träger 17 eingeschlossene Deckschicht 19.

Es ist auch denkbar, die Auflage 25 direkt als Träger 17 der Deckschicht 19 zu verwenden, um Refelexionsverluste an deren gemeinsamen Grenzfläche 27 zu vermeiden. Die Auflage 25 muss dazu nur leicht auswechselbar sein.

Die Matrize 18 kann starr oder flexibel ausgeführt sein und weist in der der Deckschicht 19 zugewandten Oberfläche eine Mikrostruktur 28 von einigen Quadratzentimetern Fläche auf. Um Unebenheiten der Deckschicht 19 auszugleichen und um eine gleichmässige Druckverteilung der Deckschicht 19 zu erzielen, wird vorteilhaft eine flexible Matrize 18 aus einer dünnen Metallfolie verwendet. Eine flexible Zwischenschicht 29 stützt die Rückseite der Matrize 18 auf das druckerzeugende Mittel 26 ab.

Das Mittel 26 presst die ungeheizte Matrize 18 mit der die Mikrostruktur 28 tragenden Oberfläche derart auf die thermoplastische Deckschicht 19, dass die Mikrostruktur 28 die Deckschicht 19 auf der ganzen Auflagefläche elastisch verformt.

Die elektromagnetische Strahlung 21 durchdringt die transparente Auflage 25 und den transparenten Träger 17. Das Fokussiermittel 23 konzentriert die elektromagnetische Strahlung 21 in einem Brennfleck in der Ebene der thermoplastischen Deckschicht 19. Die beleuchtete Stelle ist mittels der Strahlablenkvorrichtung 24 in der Ebene der Deckschicht 19 verschiebbar.

Geeignete Medien, wie Farbstoffe oder Russ, absorbieren in der Deckschicht 19 die mittels des Modulators 22 in der Intensität gesteuerte Strahlung 21 und heizen die thermoplastische Deckschicht 19 lokal an der beleuchteten Stelle auf. Die Deckschicht 19 erweicht im Flächenelement 16 (Figur 4), wobei die Wärmeableitung durch den Träger 17 (Figur 5) und die Matrize 18, die Strahlenergie und die Einwirkungsdauer der Strahlung 21 den Durchmesser s (Figur 4) des Flächenelementes 16 bestimmen. Der lokale Druck der Matrize 18 (Figur 5) genügt, um die heisse Deckschicht 19 lokal plastisch zu deformieren. Gesteuert beispielsweise durch die Strahlablenkvorrichtung 22 wandert die beleuchtete Stelle in der Deckschicht 19 weiter oder die Strahlung 21 wird durch den Modulator 22 ausgeschaltet. Sobald die Strahlung 21 nicht mehr auf das Flächenelement 16 (Figur 4) einwirkt, erstarrt die Deckschicht 19 (Figur 5) wieder und weist nun an dieser Stelle ein bleibendes Abbild der Mikrostruktur 28 auf.

Vorteilhaft wird als Strahlenquelle 20 ein Laser verwendet. Zum Abformen der Mikrostruktur 28 lässt sich die Strahlung 21 in der ganzen Ebene der Deckschicht 19 so genau fokussieren, dass die beleuchtete Stelle die Deckschicht 19 in Flächenelementen 16 (Figur 4) erwärmt, deren Durchmesser s weniger als 60 μm betragen.

Mit der beschriebenen Vorrichtung ist es möglich, in der Masterstruktur Strichbreiten s' von weniger als 60 μm zu erzeugen, da auf die Matrize 18 (Figur 5) keine seitlichen mechanischen Kräfte einwirken, die beim Abformen der Mikrostruktur 28 die Matrize 18 unkontrollierbar verschieben können und daher die Strichbreite s' (Figur 4) trotz guter Fokussierung der Strahlung 21 (Figur 5) nach unten begrenzen. Strichbreiten s' (Figur 4) von weniger als 60 μm sind zur Ausführung der Schriftzeichen, Ziffern und anderen graphisch gestalteten Merkmalen notwendig, wenn diese vom unbewaffneten menschlichen Auge nicht mehr erkannt werden dürfen. Die Schreibgeschwindigkeit wird durch die Leistung der Strahlung 21 (Figur 5) im Brennpunkt bestimmt.

Die Vorrichtung setzt in einem ersten Schritt nacheinander eine Gruppe von Teilflächen 8, 9, 10 (Figur 2) der Struktur 7 in die Masterstruktur ein, die eine gleiche Orientierung und gleiche Parameter für die Reliefstruktur 12, 12' aufweisen.

In einer zweiten Ausführung der Vorrichtung wird eine hier nicht gezeigte Lochblende im Modulator 22 mittels des Fokussiermittels 23 auf die Deckschicht 19 optisch abgebildet und erwärmt die Deckschicht 19 in einem Blendenbild zum Abformen der Mikrostruktur 28. Diese Vorrichtung erzeugt auch Flächenelemente 16 (Figur 4) mit einem Durchmesser s und Strichbreiten s' von mehr als 60 μm und beschleunigt die Erzeugung der Masterstruktur.

In einer dritten Ausführung der Vorrichtung wird die Gruppe aller Teilflächen 8, 9, 10 der Struktur 7, die eine gleiche Orientierung und gleiche Parameter für die Reliefstruktur 12, 12' aufweisen, gleichzeitig in die Masterstruktur eingesetzt. Anstelle der Lochblende wird eine Blende mit ausgeschnittenen Formen dieser Gruppe verwendet und wird zu diesem Zweck mittels des Fokussiermittels 23 (Figur 5) auf die Deckschicht 19 optisch abgebildet, wobei eine vorteilhaft impulsartige Strahlung die Deckschicht 19 in allen beleuchteten Stellen des Blendenbildes gleichzeitig erwärmt, so dass dort bleibende Abbilder von der Mikrostruktur 28 in die Masterstruktur abgeformt werden.

Die Blenden sind im Modulator 22 austauschbar und drehbar gelagert, um eine möglichst grosse Flexibilität der Vorrichtung zu erreichen.

Anschliessend wird die Matrize 18 von der Deckschicht 19 abgehoben, um eine Achse 30, die senkrecht zur Ebene der Matrize 18 steht, gedreht, lateral verschoben oder gegen eine Matrize 18 mit einer anderen Mikrostruktur 28 ausgewechselt.

In den folgenden Schritten werden weitere Gruppen von Teilflächen 8, 9, 10 (Figur 4) mit einem der oben beschriebenen Verfahren übertragen, wobei Flächenelemente 16 der Deckschicht 19 (Figur 5) erneut umgeformt werden können. Dieser Vorgang des Abformens wird so lange wiederholt, bis alle Teilflächen 8, 9, 10 (Figur 1) der Struktur 7 erzeugt worden sind.

In einer vierten Ausführung der Vorrichtung erzeugt anstelle der Strahlablenkvorrichtung 24 (Figur 5) ein steuerbarer Antrieb eine mechanische Relativbewegung zwischen einer Bestrahlungsquelle 31, die aus den Teilen 20 ; 22 und 23 besteht, und einem aus den Teilen 17 ; 18 ; 19 ; 25 ; 26 und 29 bestehenden Aggregat 32, wobei die beleuchtete Stelle, d.h. der Brennfleck oder das Blendenbild, in der Ebene der Deckschicht 19 verschoben wird.

Mittels dieser Vorrichtung reichen wenige der teuren Matrizen 18 aus, um eine unbegrenzte Zahl verschiedener Masterstrukturen herzustellen.

Die ganze Strahlsteuerung, das Drehen und das Austauschen der Matrizen 18 und der Blenden wird vorteilhaft einer hier nicht gezeigten digitalen Steuerung übertragen. Dies ermöglicht, nicht nur optimal die Steuerungsdaten aufzubereiten, sondern auch mit Hilfe der gespeicherten Steuerungsdaten die Masterstruktur beliebig oft zu reproduzieren.

Die Mikrostrukturen 28 bestimmen die Art der abgeformten Reliefstrukturen 12, 12' (Figur 2) und sind beispielsweise in der Ebene der Matrize 18 (Figur 5) periodische zweidimensionale Funktionen, deren Spatialfrequenzen in den beiden Dimensionen gleich oder verschieden sind, wobei diese Frequenzen von etwa 10 Linien/mm bis zu einem Grenzwert reichen, der nur von der Abformtechnik limitiert ist. Beispiele dafür sind einfache lineare Gitter, Kreuzgitter, Punktgitter usw.

Neben aperiodischen oder Kombinationen bisher aufgezählter Funktionen eignen sich auch allgemeinere, nur mit holographischen Mitteln erzeugbare Profilstrukturen als Mikrostrukturen 28 in den Matrizen 18.

Andere Matrizen 18 enthalten Mikrostrukturen 28 mit anisotrop oder isotrop lichtstreuenden Strukturen. Sie dienen zur Erzeugung von matten und glänzenden Stellen als zusätzliches gestalterisches Element im Muster 15 (Figur 3).

Die Mikrostrukturen 28 (Figur 5) werden mittels mechanischer Bearbeitungsmethoden, wie Ritzen usw., mittels mikrolithographischer Methoden, z.B. mittels Elektronen- oder Röntgenstrahllithographie, oder mittels chemischer oder physikalischer Ätzmethoden hergestellt.

## Patentansprüche

1. Dokument mit einer grossflächig eingeprägten, makroskopischen und beugungsoptisch wirksamen Struktur (7), die sich aus zahlreichen Teilflächen (8, 9, 10) mit vorbestimmten, beugungsoptisch wirksamen Reliefstrukturen (12, 12') mit Spatialfrequenzen von mehr als 10 Linien/mm zusammensetzt, wobei sich jede Teilfläche (8, 9, 10) in ihrer Reliefstruktur (12, 12') von denjenigen der unmittelbar angrenzenden Teilfläche (8, 9, 10) unterscheidet, dadurch gekennzeichnet, dass wenigstens eine Gruppe (8, 9) der Teilflächen (8, 9, 10) eine grösste Abmessung von weniger als 0,3 mm aufweist.

2. Dokument nach Anspruch 1, dadurch gekennzeichnet, dass jene Teilflächen (8, 9), deren grösste Abmessung weniger als 0,3 mm beträgt, die Form einer geometrischen Figur, eines Schriftzeichens, einer Ziffer oder dergleichen aufweisen.

3. Dokument nach Anspruch 1 oder 2, dadurch gekennzeichnet, dass es bei Betrachtung mit dem unbewaffneten menschlichen Auge wenigstens eine visuell sichtbare, gerade oder geschwungene Linie (14) aufweist, die sich aus jenen Teilflächen (8, 9) zusammensetzt, deren grösste Abmessung weniger als 0,3 mm beträgt, und dass diese Teilflächen (8, 9) in einer Reihe liegen, wobei deren Abstand kleiner als 0,3 mm ist.

4. Dokument nach Anspruch 3, dadurch gekennzeichnet, dass bei Betrachtung mit dem unbewaffneten menschlichen Auge visuell sichtbare Linien (14) und/oder Punkte (13) ein vorbestimmtes Muster (15) bilden.

5. Dokument nach einem der vorangehenden Ansprüche, dadurch gekennzeichnet, dass die optisch wirksame Struktur (7) in eine Klebefolie, die auf einen zu sichernden Gegenstand (6) aufgeklebt ist, eingeprägt ist.

6. Dokument nach einem der Ansprüche 1 bis 4, dadurch gekennzeichnet, dass die optisch wirksame Struktur (7) in eine drucktechnisch aufgebrachte Schicht eingeprägt ist.

7. Verfahren zum Herstellen einer Masterstruktur, die zum galvanischen. Abformen von Prägestempeln zum Prägen von Dokumenten nach einem der Ansprüche 1 bis 6 dient und in einer eine elektromagnetische Strahlung (21) absorbierenden thermoplastischen Deckschicht (19) auf einem für die elektromagnetische Strahlung (21) transparenten Träger (17) erzeugt wird, wobei die Deckschicht (19) mittels einer aufgepressten, ungeheizten Matrize (18) mit einer vorbestimmten mikroskopischen Mikrostruktur (28) elastisch verformt wird und wobei mittels der durch eine Auflage (25) und den Träger (17) hindurch auf die Deckschicht (19) fokussierten, in der Intensität gesteuerten Strahlung (21) die Deckschicht (19) lokal kurzzeitig aufgeschmolzen wird, eine lokale plastische Deformation eintritt und in einem Flächenelement (16) die beugungsoptisch wirksame Mikrostruktur (28) als ein bleibendes Abbild auf die Deckschicht (19) übertragen wird, dadurch gekennzeichnet, dass die Oberfläche der Matrize (18) mit der Mikrostruktur (28) gleichmässig auf die ganze Deckschicht (19) gepresst wird, dass die Rückseite der Matrize (18) mittels einer flexiblen Zwischenschicht (29) auf ein druckerzeugendes Mittel (26) abgestützt wird, dass im wesentlichen die ganze Fläche der Deckschicht (19) elastisch verformt wird und dass die Matrize (18) erst nach der Übertragung einer vorbestimmten Zahl von Teilflächen (8, 9, 10) um ihre Achse (30) gedreht, lateral verschoben oder gegen eine Matrize (18) mit einer anderen Mikrostruktur (28) ausgetauscht wird.

8. Verfahren nach Anspruch 7, dadurch gekennzeichnet, dass mittels der Strahlung (21) und des Fokussiermittels (23) eine im Modulator (22) angeordnete Blende auf die Deckschicht (19) abgebildet wird und dadurch die Deckschicht (19) an einer beleuchteten Stelle des Blendenbildes aufgeheizt wird.

9. Verfahren nach Anspruch 7, dadurch gekennzeichnet, dass mittels eines Fokussiermittels (23) die Strahlung (21) in einem Brennpunkt auf die Deckschicht (19) abgebildet wird und dadurch die Deckschicht (19) an der beleuchteten Stelle aufgeheizt wird.

10. Verfahren nach einem der Ansprüche 8 oder 9, dadurch gekennzeichnet, dass mittels einer Strahlablenkvorrichtung (24) die beleuchtete Stelle in der Ebene der Deckschicht (19) verschoben wird und dass die Mikrostruktur (28) in Flächenelementen (16) nacheinander an vorbestimmten Orten auf die Deckschicht (19) übertragen wird.

11. Verfahren nach einem der Ansprüche 8 oder 9, dadurch gekennzeichnet, dass mittels eines steuerbaren Antriebs eine Relativbewegung zwischen einer Bestrahlungsquelle (31) und einem Aggregat (32) erzeugt wird, dass die beleuchtete Stelle in der Ebene der Deckschicht (19) verschoben wird und dass die Mikrostruktur (28) in Flächenelementen (16) nacheinander an vorbestimmten Orten auf die Deckschicht (19) übertragen wird.

12. Verfahren nach einem der Ansprüche 8 bis 11, dadurch gekennzeichnet, dass die Strahlung (21) gleichzeitig in einer vorbestimmten Zahl von Teilflächen (8, 9, 10) in der Deckschicht (19) absorbiert wird und dass die gleiche Mikrostruktur (28) in den Teilflächen (8, 9, 10) gleichzeitig an vorbestimmten Orten auf die Deckschicht (19) übertragen wird.

**Claims**

1. A document having a macroscopic structure (7) which is impressed over a large area and which has a diffraction-optical effect and which is composed of numerous surface portions (8, 9, 10) with predetermined relief structures (12, 12') having a diffraction-optical effect, with spatial frequencies of more than 10 lines /mm, wherein each surface portion (8, 9, 10) differs in its relief structure (12, 12') from those of the directly adjoining surface portion (8, 9, 10), characterised in that at least one group (8, 9) of the surface portions (8, 9, 10) is of a largest dimension of less than 0.3 mm.

2. A document according to claim 1 characterised in that those surface portions (8, 9) whose largest dimension is less than 0.3 mm are in the shape of a geometrical figure, a character, a digit or the like.

3. A document according to claim 1 or claim 2 characterised in that when viewed with the naked human eye it has at least one visually perceptible, straight or curved line (14) which is composed of those surface portions (8, 9) whose largest dimension is less than 0.3 mm and that said surface portions (8, 9) are disposed in a row, wherein the spacing thereof is less than 0.3 mm.

4. A document according to claim 3 characterised in that visually perceptible lines (14) and/or points (13), when viewed with the naked human eye, form a predetermined pattern (15).

5. A document according to one of the preceding claims characterised in that the optically effective structure (7) is impressed into an adhesive foil which is stuck on to an item (6) to be safeguarded.

6. A document according to one of claims 1 to 4 characterised in that the optically effective structure (7) is impressed into a layer which is applied by a printing process.

7. A process for the production of a master structure which serves for the galvanic shaping of pressing punches for impressing documents according to one of claims 1 to 6 and which is produced in a thermoplastic cover layer (19) which absorbs electromagnetic radiation (21), on a carrier (17) which is transparent to the electromagnetic radiation (21), wherein the cover layer (19) is elastically deformed by means of an unheated die (18) pressed thereagainst, with a predetermined microscopic microstructure (28), and wherein the radiation (21) which is controlled in its intensity and which is focussed on to the cover layer (19) through a support (25) and the carrier (17) provides that the cover layer (19) is locally temporarily melted, local plastic deformation occurs and the microstructure (28) with a diffraction-optical effect is transferred as a permanent image on to the cover layer (19) in a surface element (16), characterised in that the surface of the die with the microstructure (28) is uniformly pressed on to the entire cover layer (19), that the rear side of the die (18) is supported by means of a flexible intermediate layer (29) against a pressure-producing means (26), that substantially the entire surface of the cover layer (19) is elastically deformed and that it is only after the transfer of a predetermined number of surface portions (8, 9, 10) that the die (18) is turned about its axis (30), laterally displaced or replaced by a die (18) with another microstructure (28).

8. A process according to claim 7 characterised in that the image of an aperture disposed in the modulator (22) is formed on the cover layer (19) by means of the radiation (21) and the focussing means (23) and thereby the cover layer (19) is heated at an irradiated location of the image of the aperture.

9. A process according to claim 7 characterised in that the radiation (21) is projected by means of the focussing means (23) on to the cover layer (19) at a focal point and thereby the cover layer (19) is heated at the irradiated location.

10. A process according to one of claims 8 and 9 characterised in that the irradiated location is displaced in the plane of the cover layer (19) by means of a beam deflection device (24) and that the microstructure (28) is successively transferred in surface elements (16) on to the cover layer (19) at predetermined locations.

11. A process according to one of claims 8 and 9 characterised in that a relative movement is produced between an irradiation source (31) and an assembly (32) by means of a controllable drive, that the irradiated location is displaced in the plane of the cover layer (19) and that the microstructure (28) is successively transferred in surface elements (16) on to the cover layer (19) at predetermined locations.

12. A process according to one of claims 8 to 11 characterised in that the radiation (21) is simultaneously absorbed in a predetermined number of surface portions (8, 9, 10) in the cover layer (19) and that the same microstructure (28) is simultaneously transferred in the surface portions (8, 9, 10) on to the cover layer (19) at predetermined locations.

**Revendications**

1. Document présentant une structure (7) imprimée sur une grande surface par estampage, macroscopique et optiquement active par diffraction, qui est constituée de plusieurs surfaces partielles (8, 9, 10) possédant des structures en relief prédéterminées, optiquement actives par diffraction (12, 12') de fréquences spatiales supérieures à 10 lignes/mm, la structure en relief (12, 12′) de chaque surface partielle (8, 9, 10) se différenciant de celles des surfaces partielles (8, 9, 10) directement limitrophes, caractérisé en ce qu'au moins un groupe (8, 9) des surfaces partielles (8, 9, 10) présente une dimension maximale inférieure à 0,3 mm.

2. Document selon la revendication 1, caractérisé en ce que les surfaces partielles (8, 9) dont la dimension maximale est inférieure à 0,3 mm, présentent la forme d'une figure géométrique, d'une lettre, d'un chiffre ou similaire.

3. Document selon la revendication 1 ou 2, caractérisé en ce qu'observé à l'oeil nu, il présente au moins une ligne visible droite ou courbe (14) composée des surfaces partielles (8, 9) dont la dimension maximale est inférieure à 0,3 mm, et en ce que ces surfaces partielles (8, 9) se trouvent dans une rangée, leur distance mutuelle étant inférieure à 0,3 mm.

4. Document selon la revendication 3, caractérisé en ce que des lignes (14) et/ou des points (13), visibles lors d'une observation à l'oeil nu, forment un dessin prédéterminé (15).

5. Document selon l'une des revendications précédentes, caractérisé en ce que la structure optiquement active (7) est estampée dans une feuille adhésive qui est collée sur un objet (6) à protéger.

6. Document selon l'une des revendications 1 à 4, caractérisé en ce que la structure optiquement active (7) est estampée dans une couche apposée par une technique de pression.

7. Procédé de fabrication d'une structure-mère, qui sert à former électrolytiquement des poinçons d'estampage pour des documents selon l'une des revendications 1 à 6, et qui est produite dans une couche de recouvrement thermoplastique (19) absorbant un rayonnement électromagnétique (21) et se trouvant sur un élément porteur (17) transparent pour le rayonnement électromagnétique (21), la couche de recouvrement (19) étant déformée élastiquement à l'aide d'une matrice pressée et non chauffée (18) présentant une microstructure microscopique prédéterminée (28), et la couche de recouvrement (19) étant localement et temporairement fondue au moyen du rayonnement (21), d'intensité commandée, qui est focalisé sur la couche de recouvrement (19) en traversant un support (25) et l'élément porteur (17), de sorte qu'une déformation plastique locale apparaît et que la microstructure optiquement active par diffraction (28) est transmise sous forme de reproduction permanente dans un élément de surface (16) sur la couche de recouvrement (19), caractérisé en ce que la surface de la matrice (18) présentant la microstructure (28) est pressée uniformément sur la totalité de la couche de recouvrement (19), en ce que le dos de la matrice (18) s'appuie au moyen d'une couche intermédiaire flexible (29) contre un moyen producteur de pression (26), en ce que sensiblement la totalité de la surface de la couche de recouvrement (19) est déformée élastiquement, et en ce que la matrice (18), seulement après avoir transmis un nombre prédéterminé de surfaces partielles (8, 9, 10), est tournée autour de son axe (30), déplacée latéralement ou remplacée par une matrice (18) présentant une autre microstructure (28).

8. Procédé selon la revendication 7, caractérisé en ce qu'un diaphragme, disposé dans le modulateur (22), est reproduit sur la couche de recouvrement (19) à l'aide du rayonnement (21) et du moyen de focalisation (23), de sorte que la couche de recouvrement (19) est réchauffée à un endroit éclairé de l'image du diaphragme.

9. Procédé selon la revendication 7, caractérisé en ce qu'à l'aide du moyen de focalisation (23), le rayonnement (20) est projeté en un foyer sur la couche de recouvrement (19), de sorte que la couche (19) est réchauffée à l'endroit éclairé.

10. Procédé selon la revendication 8 ou 9, caractérisé en ce que l'endroit éclairé est déplacé dans le plan de la couche de recouvrement (19) à l'aide d'un déflecteur de rayonnement (24), et en ce que la microstructure (28) est transmise successivement dans des éléments de surface (16) en des endroits prédéterminés sur la couche de recouvrement (19).

11. Procédé selon la revendication 8 ou 9, caractérisé en ce qu'un mouvement relatif entre une source de rayonnement (31) et un dispositif (32) est produit au moyen d'un entraînement asservissable, en ce que l'endroit éclairé est déplacé dans le plan de la couche de recouvrement (19), et en ce que la microstructure (28) est transmise successivement dans des éléments de surface (16) en des endroits prédéterminés sur la couche de recouvrement (19).

12. Procédé selon l'une des revendications 8 à 11, caractérisé en ce que le rayonnement (21) est simultanément absorbé dans un nombre prédéterminé de surfaces partielles (8, 9, 10) dans la couche de recouvrement (19), et en ce que la même microstructure (28) est simultanément transmise dans les surfaces partielles (8, 9, 10), en des endroits prédéterminés sur la couche de recouvrement (19).

# Fig. 1

# Fig. 2

# Fig. 3

# Fig. 4

# Fig. 5